# EUROPÄISCHE PATENTSCHRIFT

(11) **EP 1 602 944 B1**
(45) Veröffentlichungstag und Bekanntmachung des Hinweises auf die Patenterteilung: **08.11.2006**
(21) Anmeldenummer: 05010447.0
(22) Anmeldetag: 13.05.2005
(51) Int. Cl.: G01V 8/10

(54) **Optischer Sensor**
Optical sensor
Capteur optique

(30) Priorität: 04.06.2004 DE 102004027484
(43) Veröffentlichungstag der Anmeldung: 07.12.2005
(73) Patentinhaber: Leuze electronic GmbH + Co KG, 73277 Owen/Teck (DE)
(72) Erfinder: Moll, Georg, 72655 Altdorf (DE); Rueff, Martin, 73066 Uhingen (DE)
(74) Vertreter: Ruckh, Rainer Gerhard

(56) Entgegenhaltungen:
- EP-A- 1 083 671
- DE-A1- 10 202 305
- DE-U1- 20 003 675

## Beschreibung

Die Erfindung betrifft einen optischen Sensor gemäß dem Oberbegriff des Anspruchs 1.

Derartige optische Sensoren können insbesondere als Barcodelesegeräte ausgebildet sein, mittels derer Barcodes innerhalb eines vorgegebenen Erfassungsbereichs detektiert werden. Die Informationen über die erfassten Barcodes können über eine serielle Schnittstelle oder dergleichen ausgegeben werden.

Weiterhin können derartige optische Sensoren separate Schalteingänge und Schaltausgänge aufweisen. Über einen Schaltausgang können Schaltausgangssignale ausgegeben werden, die typischerweise als binäre Signale ausgebildet sind. Die Schaltausgangssignale können beispielsweise als Statusmeldungen ausgebildet sein, welche angeben, ob ein Barcode erfolgreich gelesen wurde oder nicht. Weiterhin können mit den Schaltausgangssignalen Warnsignale, Fehlermeldungen oder dergleichen ausgegeben werden. Die Schalteingangssignale sind ebenfalls im Allgemeinen als binäre Signalfolgen ausgebildet. Die Schalteingangssignale können dabei als Parametersignale und insbesondere als Aktivierungssignale ausgebildet sein, mittels derer der jeweilige optische Sensor innerhalb vorgegebener Zeitintervalle aktivierbar ist.

Beispiele derartiger Sensoren sind in DE 102 02 305 bzw. DE 200 03 675 U gezeigt.

Nachteilig hierbei ist, dass für ein Schaltausgangssignal und ein Schalteingangssignal im Allgemeinen separate Anschlussleitungen am optischen Sensor vorgesehen sind. Je nach Ausbildung der Schnittstelleneinheit des optischen Sensors, insbesondere des Steckers des optischen Sensors, steht jedoch nur eine begrenzte Anzahl von derartigen Anschlussleitungen zur Verfügung, so dass unter Umständen keine Anschlussmöglichkeit für separate Anschlussleitungen für die Schaltausgangssignale und Schalteingangssignale besteht.

Prinzipiell besteht die Möglichkeit, eine derartige Anschlussleitung eines optischen Sensors als Ein-Ausgang auszubilden, so dass über diesen wahlweise Schaltausgangssignale oder Schalteingangssignale übertragen werden können. Nachteilig hierbei ist jedoch, dass bei Einlesen von Schalteingangssignalen über einen derartigen Ein-Ausgang eine gleichzeitige Ausgabe von Schaltausgangssignalen nicht möglich ist. Umgekehrt können über den Ein-Ausgang keine Schalteingangssignale eingelesen werden, solange über diesen Schaltausgangssignale ausgegeben werden. Dies führt zu einer unerwünschten Einschränkung der Verfügbarkeit bei der Übertragung derartiger Schaltausgangssignale und Schalteingangssignale.

Der Erfindung liegt die Aufgabe zugrunde, einen optischen Sensor der eingangs genannten Art bereitzustellen, bei welchem mit geringem Schaltungsaufwand eine möglichst effiziente Ein- und Ausgabe von Signalen gewährleistet ist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Der erfindungsgemäße optische Sensor dient zur Erfassung von Marken und/oder Gegenständen in einem Erfassungsbereich. Der optische Sensor weist einen Sendelichtstrahlen emittierenden Sender, einen Empfangslichtstrahlen empfangenden Empfänger und eine Auswerteeinheit auf. Der Auswerteeinheit sind eine Stromsteuerschaltung und eine Spannungssteuerschaltung zugeordnet, mittels derer simultan über eine Anschlussleitung Schalteingangssignale und Schaltausgangssignale übertragbar sind. An die Anschlussleitung ist eine externe Anschlusseinheit zum Separieren der Schalteingangssignale und Schaltausgangssignale anschließbar.

Durch die Stromsteuerschaltung und die Spannungssteuerschaltung können die Schaltausgangssignale einerseits und die Schalteingangssignale andererseits nahezu rückwirkungsfrei über die gemeinsame Anschlussleitung übertragen werden. Damit können die Schaltausgangssignale und Schalteingangssignale gleichzeitig über die Anschlussleitung übertragen werden. Im Vergleich zu bekannten Ein-Ausgängen, bei welchen zu einem Zeitpunkt jeweils nur eines dieser Signale übertragen werden kann, wird bei dem erfindungsgemäßen optischen Sensor eine erheblich effizientere Informationsübertragung erhalten, da über eine Anschlussleitung die Schaltausgangssignale und Schalteingangssignale simultan übertragen werden können, ohne dass sich diese Signale beeinflussen. In einer besonders vorteilhaften Ausführungsform ist im optischen Sensor eine Stromquelle als Stromsteuerschaltung integriert, mittels derer die Schaltausgangssignale als Stromsignale ausgegeben werden. Die Spannungssteuerschaltung dient dann zum Einlesen der Schalteingangssignale über die Anschlussleitung.

Ein weiterer wesentlicher Vorteil der Erfindung besteht darin, dass die simultane Datenübertragung über die Anschlussleitung für einen großen Variationsbereich der Versorgungsspannung des optischen Sensors durchführbar ist.

Die über die Anschlussleitung gemeinsam übertragenen Schaltausgangssignale und Schalteingangssignale werden in der Anschlusseinheit separiert und stehen dann an einem separaten Eingang und Ausgang an. Dabei sind diese bevorzugt als spannungsgesteuerter Eingang und Ausgang ausgebildet und stellen somit Standardschnittstellen zur Ein- und Ausgabe von Signalen dar.

Die Anschlusseinheit weist keine aktiven Signalverarbeitungskomponenten auf, sondern enthält lediglich eine Beschaltung zur Trennung der Strom- und Spannungssignale. Daher weist die Anschlusseinheit einen einfachen Aufbau auf Die Anschlusseinheit kann damit ohne großen Aufwand in Anschlussmodulen für optische Sensoren integriert werden, die beispielsweise als Adapter für mechanische Anschlüsse der optischen Sensoren an externe Einheiten wie Steuerungen oder Bussysteme dienen.

Für den Fall, dass der optische Sensor als Barcodelesegerät ausgebildet ist, weist dieser als Schnittstelle typischerweise einen fünfpoligen Rundsteckverbinder auf. Das Anschlussmodul dient dann zur Umsetzung auf Klemmenanschlüsse als Standardschnittstelle zum Anschluss externer Einheiten. In derartigen Anschlussmodulen kann die Anschlusseinheit ohne nennenswerten Aufwand integriert werden. In einer besonders vorteilhaften Ausführungsform kann auch die Spannungsversorgung für den optischen Sensor in dem Anschlussmodul integriert sein.

Bei einem als Barcodelesegerät ausgebildeten optischen Sensor werden als Schaltausgangssignale typischerweise binäre Statussignale ausgegeben, welche beispielsweise anzeigen, ob ein Barcode erfolgreich gelesen wurde oder nicht. Alternativ können die Schaltausgangssignale von Warnsignalen oder dergleichen gebildet sein. Die Schalteingangssignale sind bevorzugt als Parametersignale, insbesondere als Aktivierungssignale ausgebildet, mittels derer der optische Sensor innerhalb vorgegebener Zeitintervalle aktivierbar oder deaktivierbar ist.

Der optische Sensor kann nicht nur als Barcodelesegerät ausgebildet sein, sondern auch als Distanzsensor, binäres Schaltgerät oder dergleichen. Binäre Schaltgeräte, die als Lichtschranken, Lichttaster oder Reflexionslichtschranken ausgebildet sein können, generieren zur Detektion von Objekten in einem Erfassungsbereich binäre Objektfeststellungssignale, die als Schaltausgangssignale ausgebbar sind. Auch für derartige optische Sensoren können als Schalteingangssignale Parametersignale über die Anschlussleitung eingelesen werden.

Prinzipiell kann der optische Sensor dahingehend erweitert sein, dass über die Anschlussleitung eine bidirektionale serielle Datenübertragung im Vollduplex-Betrieb erfolgt.

Die Erfindung wird im Nachstehenden anhand der Zeichnungen erläutert. Es zeigen:
- Figur 1:: Schematische Darstellung eines als Barcodelesegerät ausgebildeten optischen Sensors.
- Figur 2:: Blockschaltbild der Auswerteeinheit des optischen Sensors gemäß Figur 1 mit einer Beschaltung zur Ausgabe von Schaltausgangssignalen und zum Einlesen von Schalteingangssignalen über eine gemeinsame Anschlussleitung und eine Anschlusseinheit zum Separieren der Schaltausgangssignale und Schalteingangssignale.
- Figur 3:: Zeitliche Verläufe der Schalteingangssignale an den Eingängen der Anschlusseinheit beziehungsweise der Auswerteeinheit.
- Figur 4:: Zeitliche Verläufe der Schalteingangssignale und Schaltausgangssignale an den Eingängen und Ausgängen der Anschlusseinheit beziehungsweise der Auswerteeinheit.

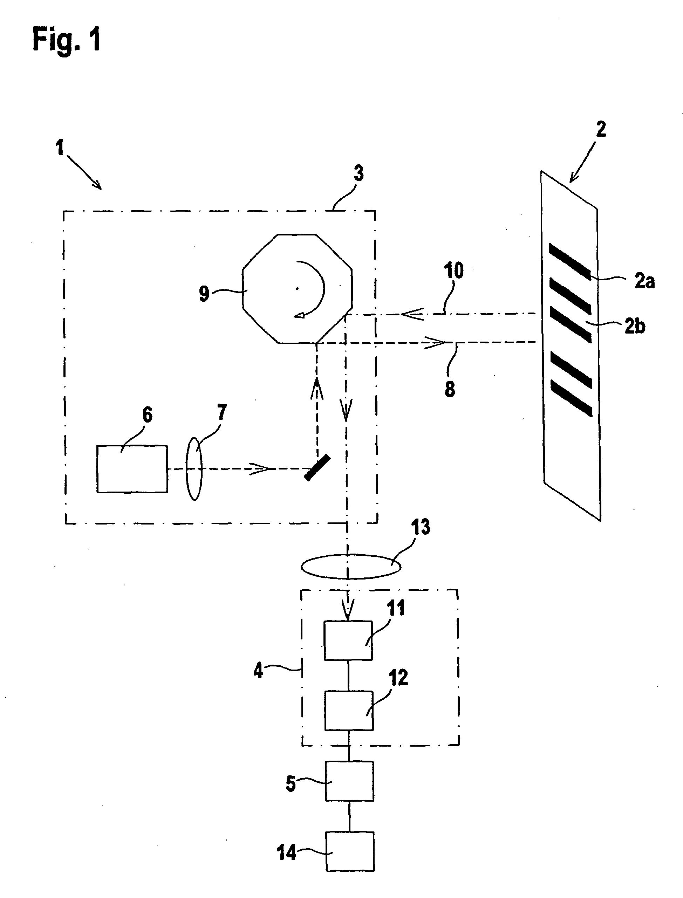

Figur 1 zeigt den prinzipiellen Aufbau eines als Barcodelesegerät ausgebildeten optischen Sensors 1 zur Detektion von Barcodes 2 in einem Erfassungsbereich. Die Barcodes 2 bestehen aus einer Folge von dunklen und hellen Strichelementen 2a, b.

Der optische Sensor 1 besteht im Wesentlichen aus einer Sendeeinheit 3, einer Empfangseinheit 4 sowie einer Auswerteeinheit 5. Die Sendeeinheit 3 besteht aus einem Sender 6, vorzugsweise einer Laserdiode, sowie aus einer dem Sender 6 vorgeschalteten Sendeoptik 7 zur Fokussierung der vom Sender 6 emittierten Sendelichtstrahlen 8. Die fokussierten Sendelichtstrahlen 8 werden über eine Ablenkeinheit 9, die im vorliegenden Ausführungsbeispiel von einem rotierenden Polygonspiegelrad gebildet ist, abgelenkt und über den zu detektierenden Barcode 2 geführt. Die Drehachse des Polygonspiegelrads ist senkrecht zur in Figur 1 dargestellten Äquatorialebene des Polygonspiegelrads angeordnet.

Die vom Barcode 2 reflektierten Empfangslichtstrahlen 10 werden über das Polygonspiegelrad zur Empfangseinheit 4 geführt. Die Empfangseinheit 4 besteht aus einem Empfänger 11, insbesondere einer Fotodiode, in der die Empfangslichtstrahlen 10 in ein elektrisches Empfangssignal gewandelt werden. Dem Empfänger 11 ist eine Signalvorverarbeitungsstufe 12 nachgeordnet. Zur Verbesserung der Nachweisempfindlichkeit ist der Empfangseinheit 4 eine Empfangsoptik 13 vorgeordnet.

Entsprechend dem Strichmuster des Barcodes 2 ist dem Empfangssignal am Ausgang des Empfängers 11 eine Amplitudenmodulation aufgeprägt, die zur Decodierung des Barcodes 2 in der Auswerteeinheit 5 ausgewertet wird. Das decodierte Barcodesignal wird über eine serielle Schnittstelle ausgegeben. Die Ausgabe erfolgt über einen Stecker 14, der im vorliegenden Fall als fünfpoliger Rundsteckverbinder ausgebildet ist.

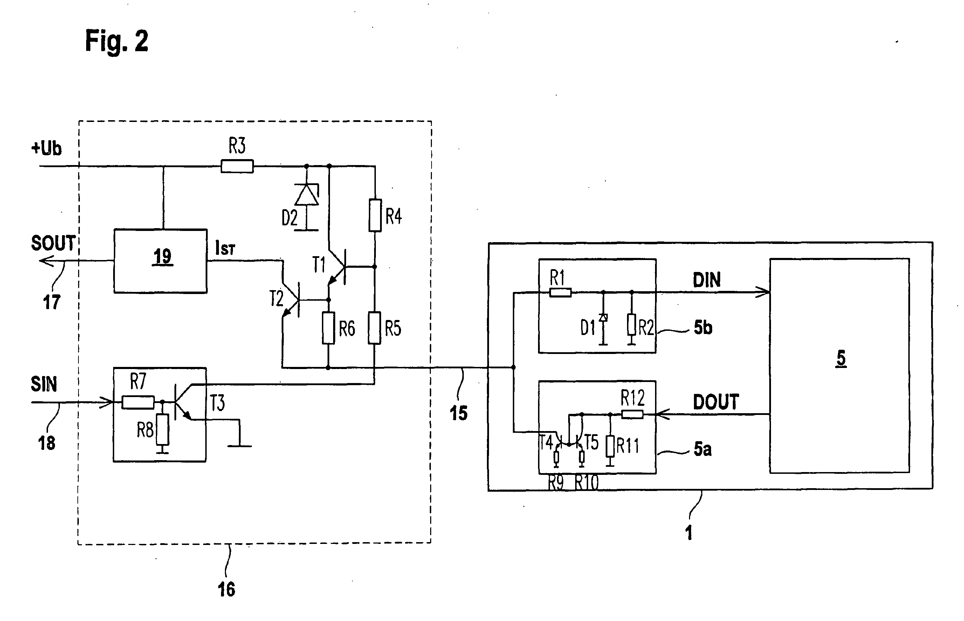

Figur 2 zeigt die von einem Microcontroller gebildete Auswerteeinheit 5 des optischen Sensors 1 gemäß Figur 1. Wie aus Figur 2 ersichtlich, ist der Auswerteeinheit 5 eine Stromsteuerschaltung 5a in Form einer Stromquelle und eine Spannungssteuerschaltung 5b zugeordnet. Mittels der Stromquelle können Schaltausgangssignale, die in Figur 2 mit DOUT bezeichnet sind, aus der Auswerteeinheit 5 des optischen Sensors 1 ausgegeben werden. Mittels der Spannungssteuerschaltung 5b können Schalteingangssignale, die in Figur 2 mit DIN bezeichnet sind, in die Auswerteeinheit 5 des optischen Sensors 1 eingegeben werden. Die Schaltausgangssignale DOUT und die Schalteingangssignale DIN sind jeweils als binäre Signalfolgen ausgebildet, wobei die Schaltausgangssignale DOUT insbesondere als Statussignale oder Warnsignale und die Schalteingangssignale DIN als Parametersignale oder Aktivierungssignale zur Aktivierung oder Deaktivierung des optischen Sensors 1 ausgebildet sind.

Da mit der Stromsteuerschaltung 5a eine Stromsteuerung und der Spannungssteuerschaltung 5b eine Spannungssteuerung zur Signalübertragung durchgeführt wird, können die Schaltausgangssignale DOUT und Schalteingangssignale DIN nahezu rückwirkungsfrei und insbesondere auch simultan über eine gemeinsame Anschlussleitung 15 übertragen werden. Dabei ist die Anschlussleitung 15 auf einen Anschlusspin des Steckers 14 des optischen Sensors 1 geführt.

Wie aus Figur 2 ersichtlich, besteht die Stromquelle aus einer Schaltung mit Transistoren T4, T5 und Widerständen R9, R10, R11, R12. Die Spannungssteuerschaltung 5b besteht aus einer Schaltung mit einer Diode D1 und Widerständen R1, R2.

Die Anschlussleitung 15 des optischen Sensors 1 ist auf eine Anschlusseinheit 16 geführt, die im vorliegenden Fall Bestandteil eines Anschlussmoduls zur Umsetzung des Anschlusses des optischen Sensors 1 auf Klemmenanschlüsse zum Anschluss an externe Einheiten wie Steuerungen und dergleichen ist.

In der Anschlusseinheit 16 erfolgt eine Separierung der über die Anschlussleitung 15 gemeinsam übertragenen Schaltausgangssignale DOUT und Schalteingangssignale DIN, so dass diese die Schaltausgangssignale DOUT als Ausgangssignale SOUT an einem spannungsgesteuerten Ausgang 17 der Anschlusseinheit 16 ausgebbar sind und die Schalteingangssignale DIN als Eingangssignale SIN an einem spannungsgesteuerten Eingang 18 als Eingangssignale SIN eingebbar sind. Dem Ausgang 17 ist eine als High-Side-Schalter ausgebildete Treiberschaltung 19 vorgeschaltet. Dem Eingang 18 ist eine Schaltung bestehend aus Widerständen R7, R8 und einem Transistor T3 nachgeordnet.

In der Anschlusseinheit 16 wird die Versorgungsspannung U_{b} über einen Widerstand R3 und eine Diode D2 auf eine steuerbare Spannungsquelle, bestehend aus einem Transistor T1 und Widerständen R4, R5, geführt. Ein Widerstand R6 dient zur Einspeisung des durch die steuerbare Spannungsquelle vorgegebenen Spannungspegels über die Anschlussleitung 15 in den optischen Sensor 1. Gleichzeitig bildet der Widerstand R6 einen Stromfühler für den in der Stromquelle des optischen Sensors 1 generierten Strom, wobei in Abhängigkeit der Stromstärke am Widerstand R6 ein Transistor T2 zur Ansteuerung des Ausgangs 17 der Anschlusseinheit 16 schaltbar ist.

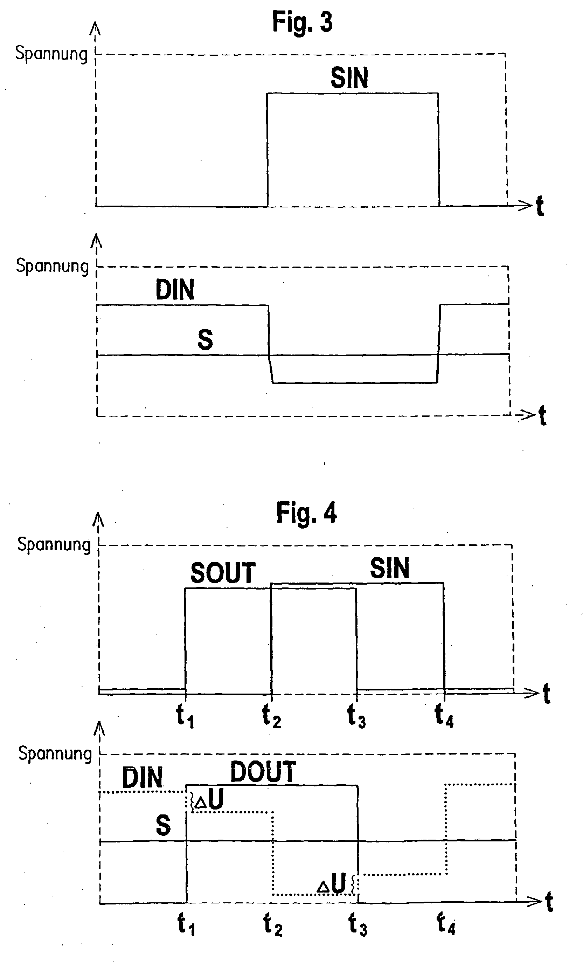

Figur 3 zeigt im oberen Diagramm den zeitlichen Verlauf des Eingangssignals SIN am Eingang 18 der Anschlusseinheit 16 und den dadurch erhaltenen zeitlichen Verlauf des Schalteingangssignals DIN am Eingang der Auswerteeinheit 5 (unteres Diagramm in Figur 3).

Das Eingangssignal SIN am Eingang 18 gelangt über den Widerstandsteiler bestehend aus den Widerständen R7, R8, auf die Basis des Transistors T3. Das Emitterpotential des Transistors T2 der steuerbaren Spannungsquelle variiert in Abhängigkeit der Spannung des Eingangssignals SIN, wodurch ein entsprechend zu SIN variierendes Schalteingangssignal DIN generiert wird, welches durch Weitergabe der Spannung am Emitterpotential des Transistors T1 über den Widerstand R6 über die Anschlussleitung 15 in den optischen Sensor 1 eingegeben wird. Das am Ausgang der Spannungssteuerschaltung 5b anstehende Schalteingangssignal DIN wird in der Auswerteeinheit 5 mit dem in Figur 3 (unteres Diagramm) dargestellten Schwellwert S in eine binäre Signalfolge gewandelt.

Das Einlesen des Eingangssignals SIN erfolgt im Wesentlichen analog zu dem Beispiel gemäß Figur 3.

In dem oberen Diagramm von Figur 4 ist der Fall sich überlagernder Eingangssignale SIN und Ausgangssignale SOUT dargestellt.

Das Einlesen der Eingangssignale SIN erfolgt im Wesentlichen analog zu dem Beispiel gemäß Figur 3.

Das Ausgangssignal SOUT liegt im Zeitintervall zwischen t₁ und t₃ auf seinem High-Pegel. Das Eingangssignal SIN liegt zwischen t₂ und t₄ auf seinem High-Pegel. Somit liegen im Zeitintervall zwischen t₂ und t₃ das Eingangssignal SIN und Ausgangssignal SOUT auf dem High-Pegel.

Wird im optischen Sensor 1 das Schaltausgangssignal DOUT aktiviert, das heißt auf seinen High-Pegel gesetzt (Zeitintervall zwischen t₁ und t₃ im unteren Diagramm von Figur 4), so wird der Transistor T2 durchgeschaltet und steuert über das Stromsignal IST die Treiberschaltung 19 an, wodurch auch das Ausgangssignal SOUT am Ausgang 17 auf High-Pegel gesetzt wird.

Bei Aktivierung des Ausgangs durch das Schaltausgangssignal DOUT wird durch den Strom der Stromquelle des optischen Sensors 1 die Spannung an der Anschlussleitung 15, das heißt der Wert von SIN wie in Figur 4 (oberes Diagramm) um einen Wert ΔU reduziert, welcher maximal der BasisEmitterspannung des Transistors T2 entspricht. Dieser Spannungsabfall ΔU ist jedoch so gering, dass der Wert von DIN noch oberhalb des Schwellwerts S liegt, so dass die Binarisierung des Schalteingangssignals DIN mittels des Schwellwerts S durch diesen Spannungsabfall ΔU nicht beeinträchtigt wird. In entsprechender Weise erhöht sich der Wert des Schalteingangssignals DIN bei Deaktivierung des Schaltausgangssignals DOUT um den Wert ΔU, wobei in diesem Fall gewährleistet ist, dass das Schalteingangssignal DIN noch sicher unterhalb des Schwellwerts S verbleibt, so dass auch in diesem Fall der Spannungsabfall ΔU nicht zu einer Verfälschung der mit dem Schwellwert S aus dem Schalteingangssignal DIN generierten binären Signalfolge führt.

Damit können die Schalteingangssignale DIN und Schaltausgangssignale DOUT simultan und rückwirkungsfrei über die gemeinsame Anschlussleitung 15 übertragen werden. Dabei kann die Versorgungsspannung U_{b} in einem weiten Bereich, typischerweise zwischen 5V und 30V, variiert werden, ohne dass hierbei Signalverfälschungen auftreten würden.

### Bezugszeichenliste

- (1): Optischer Sensor
- (2): Barcodes 2
- (2a,b): dunkle und helle Strichelemente
- (3): Sendeeinheit
- (4): Empfangseinheit
- (5): Auswerteeinheit
- (5a): Stromsteuerschaltung
- (5b): Spannungssteuerschaltung
- (6): Sender
- (7): Sendeoptik
- (8): Sendelichtstrahlen
- (9): Ablenkeinheit
- (10): Empfangslichtstrahlen
- (11): Empfänger
- (12): Signalvorverarbeitungsstufe
- (13): Empfangsoptik
- (14): Stecker
- (15): Anschlussleitung
- (16): Anschlusseinheit
- (17): Ausgang
- (18): Eingang
- (19): Treiberschaltung

- D1: Diode
- D2: Diode

- DIN: Schalteingangssignale
- DOUT: Schaltausgangssignale
- R1: Widerstand
- R2: Widerstand
- R3: Widerstand
- R4: Widerstand
- R5: Widerstand
- R6: Widerstand
- R7: Widerstand
- R8: Widerstand
- R9: Widerstand
- R10: Widerstand
- R11: Widerstand
- R12: Widerstand
- S: Schwellwert
- SIN: Eingangssignale
- SOUT: Ausgangssignale
- t1: Zeitpunkt
- t2: Zeitpunkt
- t3: Zeitpunkt
- t4: Zeitpunkt
- T1: Transistor
- T2: Transistor
- T3: Transistor
- T4: Transistor
- T5: Transistor
- U_{b}: Versorgungsspannung
- ΔU: Spannungsabfall

## Patentansprüche

1. Optischer Sensor zur Erfassung von Marken und/oder Gegenständen in einem Erfassungsbereich mit einem Sendelichtstrahlen emittierenden Sender, einem Empfangslichtstrahlen empfangenden Empfänger und einer Auswerteeinheit, **dadurch gekennzeichnet, dass** der Auswerteeinheit (5) eine Stromsteuerschaltung (5a) und eine Spannungssteuerschaltung 5b zugeordnet sind, mittels derer simultan über eine Anschlussleitung (15) Schalteingangssignale (DIN) und Schaltausgangssignale (DOUT) übertragbar sind, und dass an die Anschlussleitung (15) eine externe Anschlusseinheit (16) zum Separieren der Schalteingangssignale (DIN) und Schaltausgangssignale (DOUT) anschließbar ist.

2. Optischer Sensor nach Anspruch 1, **dadurch gekennzeichnet, dass** die Stromsteuerschaltung (5a) von einer Stromquelle gebildet ist, mittels derer Schaltausgangssignale (DOUT) über die Anschlussleitung (15) ausgebbar sind.

3. Optischer Sensor nach Anspruch 2, **dadurch gekennzeichnet, dass** mittels der Spannungssteuerschaltung (5b) Schalteingangssignale (DIN) über die Anschlussleitung (15) in die Auswerteeinheit (5) einlesbar sind.

4. Optischer Sensor nach einem der Ansprüche 1 - 3, **dadurch gekennzeichnet, dass** die Anschlusseinheit (16) einen spannungsgesteuerten Eingang (18) zur Eingabe von Schalteingangssignalen (DIN) und einen spannungsgesteuerten Ausgang (17) zur Ausgabe von Schaltausgangssignalen (DOUT) aufweist.

5. Optischer Sensor nach einem der Ansprüche 1 - 4, **dadurch gekennzeichnet, dass** die Schalteingangssignale (DIN) und Schaltausgangssignale (DOUT) binäre Signale bilden.

6. Optischer Sensor nach einem der Ansprüche 4 oder 5, **dadurch gekennzeichnet, dass** die Anschlusseinheit (16) eine steuerbare Spannungsquelle zur Generierung definierter Spannungspegel für die Schaltzustände der Schalteingangssignale (DIN) aufweist.

7. Optischer Sensor nach Anspruch 6, **dadurch gekennzeichnet, dass** die steuerbare Spannungsquelle einen Transistor (T2) und Widerstände (R4, R5) aufweist.

8. Optischer Sensor nach Anspruch 7, **dadurch gekennzeichnet, dass** die Anschlusseinheit (16) einen Widerstand (R6) aufweist, über welchen die durch die steuerbare Spannungsquelle vorgegebenen Spannungspegel in die Anschlussleitung (15) einspeisbar sind, und welcher einen Stromfühler für den in der Stromquelle generierten Strom bildet.

9. Optischer Sensor nach Anspruch 8, **dadurch gekennzeichnet, dass** in Abhängigkeit der Stromstärke am Widerstand (R6) ein Transistor (T2) zur Ansteuerung des Ausgangs (17) der Anschlusseinheit (16) schaltbar ist.

10. Optischer Sensor nach einem der Ansprüche 1 - 9, **dadurch gekennzeichnet, dass** dessen Spannungsversorgung in der Anschlusseinheit (16) integriert ist.

11. Optischer Sensor nach einem der Ansprüche 1 - 10, **dadurch gekennzeichnet, dass** über die Anschlussleitung (15) eine bidirektionale serielle Datenübertragung im Vollduplex Betrieb erfolgt.

12. Optischer Sensor nach einem der Ansprüche 1 - 10, **dadurch gekennzeichnet, dass** dieser als Barcodelesegerät ausgebildet ist.

13. Optischer Sensor nach einem der Ansprüche 1 - 10, **dadurch gekennzeichnet, dass** die Schaltausgangssignale (DOUT) von binären Warn- oder Statussignalen gebildet sind.

14. Optischer Sensor nach einem der Ansprüche 1 - 10, **dadurch gekennzeichnet, dass** dieser als binäres Schaltgerät ausgebildet ist.

15. Optischer Sensor nach Anspruch 14, **dadurch gekennzeichnet, dass** das binäre Schaltgerät als Lichtschranke, Lichttaster oder Reflexionslichtschranke ausgebildet ist.

16. Optischer Sensor nach einem der Ansprüche 14 oder 15, **dadurch gekennzeichnet, dass** die Schaltausgangssignale (DOUT) von binären Objektfeststellungssignalen gebildet sind.

17. Optischer Sensor nach einem der Ansprüche 12 - 16, **dadurch gekennzeichnet, dass** die Schalteingangssignale (DIN) von Parametersignalen oder Aktivierungssignalen gebildet sind.

## Claims

1. Optical sensor for detection of marks and/or objects in a detection region with a transmitter emitting transmitted light beams, a receiver receiving received light beams and an evaluating unit, **characterised in that** a current control circuit (5a) and a voltage control circuit (5b), by means of which switching input signals (DIN) and switching output signals (DOUT) are transmissible simultaneously, are associated with the evaluating unit (5) and that an external connection unit (16) for separation of the switching input signals (DIN) and switching out signals (DOUT) is connectible with the connecting line (15).

2. Optical sensor according to claim 1, **characterised in that** the current control circuit (5a) is formed by a current source, by means of which switching output signals (DOUT) can be issued by way of the connecting line (15).

3. Optical sensor according to claim 2, **characterised in that** switching input signals (DIN) can be read into the evaluating unit (5) by means of the voltage control circuit (5b) via the connecting line (15).

4. Optical sensor according to one of claims 1 to 3, **characterised in that** the connecting unit (16) comprises a voltage-controlled input (18) for input of switching input signals (DIN) and a voltage-controlled output (17) for output of switching output signals (DOUT).

5. Optical sensor according to one of claims 1 to 4, **characterised in that** the switching input signals (DIN) and switching output signals (DOUT) form binary signals.

6. Optical sensor according to one of claims 4 and 5, **characterised in that** the connecting unit (16) comprises a controllable voltage source for generation of defined voltage levels for the switching states of the switching input signals (DIN).

7. Optical sensor according to claim 6, **characterised in that** the controllable voltage source comprises a transistor (T2) and resistors (R4, R5).

8. Optical sensor according to claim 7, **characterised in that** the connecting unit (16) comprises a resistor (R6) by way of which the voltage level, which is predetermined by the controllable voltage source, can be fed into the connecting line (15) and which forms a current detector for the current generated in the voltage source.

9. Optical sensor according to claim 8, **characterised in that** a transistor (T2) for drive control of the output (17) of the connecting unit (16) is switchable in dependence on the current strength at the resistor (R6).

10. Optical sensor according to one of claims 1 to 9, **characterised in that** the voltage supply thereof is integrated in the connecting unit (16).

11. Optical sensor according to one of claims 1 to 10, **characterised in that** a bidirectional serial data transmission takes place in full-duplex operation by way of the connecting line (15).

12. Optical sensor according to one of claims 1 to 10, **characterised in that** this is constructed as a bar code reader.

13. Optical sensor according to one of claims 1 to 10, **characterised in that** the switching output signals (DOUT) are formed by binary warning or status signals.

14. Optical sensor according to one of claims 1 to 10, **characterised in that** this is formed as a binary switching apparatus.

15. Optical sensor according to claim 14, **characterised in that** the binary switching apparatus is formed as a light barrier, light scanner or reflection light barrier.

16. Optical sensor according to one of claims 14 and 15, **characterised in that** the switching output signals (DOUT) are formed by binary object determination signals.

17. Optical sensor according to one of claims 12 to 16, **characterised in that** the switching input signals (DIN) are formed by parameter signals or activation signals.

## Revendications

1. Capteur optique pour la saisie de marques et/ou d'objets dans une zone de saisie, comprenant un émetteur émettant des rayons lumineux d'émission, un récepteur recevant des rayons lumineux de réception et une unité d'évaluation, **caractérisé par le fait qu'**à l'unité d'évaluation (5) sont associés un circuit de commande de courant (5a) et un circuit de commande de tension (5b) au moyen desquels des signaux d'entrée de commutation (DIN) et des signaux de sortie de commutation (DOUT) peuvent être transmis simultanément par une ligne de connexion (15), et qu'une unité de connexion externe (16) servant à séparer les signaux d'entrée de commutation (DIN) et les signaux de sortie de commutation (DOUT) peut être connectée à la ligne de connexion (15).

2. Capteur optique selon la revendication 1, **caractérisé par le fait que** le circuit de commande de courant (5a) est formé par une source de courant au moyen de laquelle des signaux de sortie de commutation (DOUT) peuvent être sortis par la ligne de connexion (15).

3. Capteur optique selon la revendication 2, **caractérisé par le fait qu'**il est possible de charger des signaux d'entrée de commutation (DIN) dans l'unité d'évaluation (5) par la ligne de connexion (15) au moyen du circuit de commande de tension (5b).

4. Capteur optique selon l'une des revendications 1 à 3, **caractérisé par le fait que** l'unité de connexion (16) présente une entrée (18) commandée en tension pour l'entrée de signaux d'entrée de commutation (DIN) et une sortie (17) commandée en tension pour la sortie de signaux de sortie de commutation (DOUT).

5. Capteur optique selon l'une des revendications 1 à 4, **caractérisé par le fait que** les signaux d'entrée de commutation (DIN) et les signaux de sortie de commutation (DOUT) forment des signaux binaires.

6. Capteur optique selon l'une des revendications 4 ou 5, **caractérisé par le fait que** l'unité de connexion (16) présente une source de tension commandable pour la génération de niveaux de tension définis pour les états de commutation des signaux d'entrée de commutation (DIN).

7. Capteur optique selon la revendication 6, **caractérisé par le fait que** la source de tension commandable présente un transistor (T2) et des résistances (R4, R5).

8. Capteur optique selon la revendication 7, **caractérisé par le fait que** l'unité de connexion (16) présente une résistance (R6) via laquelle le niveau de tension prédéfini par la source de tension commandable peut être injecté dans la ligne de connexion (15) et qui forme un détecteur de courant pour le courant généré dans la source de courant.

9. Capteur optique selon la revendication 8, **caractérisé par le fait qu'**un transistor (T2) est commutable pour commander la sortie (17) de l'unité de connexion (16) en fonction de l'intensité du courant dans la résistance (R6).

10. Capteur optique selon l'une des revendications 1 à 9, **caractérisé par le fait que** sa tension d'alimentation est intégrée dans l'unité de connexion (16).

11. Capteur optique selon l'une des revendications 1 à 10, **caractérisé par le fait qu'**il se produit une transmission de données sérielle bidirectionnelle en duplex intégral par la ligne de connexion (15).

12. Capteur optique selon l'une des revendications 1 à 10, **caractérisé par le fait que** celui-ci est réalisé sous forme de lecteur de codes barres.

13. Capteur optique selon l'une des revendications 1 à 10, **caractérisé par le fait que** les signaux de sortie de commutation (DOUT) sont formés de signaux d'avertissement ou d'état binaires.

14. Capteur optique selon l'une des revendications 1 à 10, **caractérisé par le fait que** celui-ci est réalisé sous forme de dispositif de commutation binaire.

15. Capteur optique selon la revendication 14, **caractérisé par le fait que** le dispositif de commutation binaire est réalisé sous forme de barrière photoélectrique, de détecteur photosensible ou de barrière photoélectrique à réflexion.

16. Capteur optique selon l'une des revendications 14 ou 15, **caractérisé par le fait que** les signaux de sortie de commutation (DOUT) sont formés de signaux binaires de détection d'objet.

17. Capteur optique selon l'une des revendications 12 à 16, **caractérisé par le fait que** les signaux d'entrée de commutation (DIN) sont formés de signaux de paramètres ou de signaux d'activation.
